# EUROPÄISCHE PATENTSCHRIFT

(11) **EP 0 564 677 B1**
(45) Veröffentlichungstag und Bekanntmachung des Hinweises auf die Patenterteilung: **04.09.1996**
(21) Anmeldenummer: 92106031.5
(22) Anmeldetag: 08.04.1992
(51) Int. Cl.: A47L 15/44, H02B 1/048

(54) **Dosiervorrichtung für Geschirrspülmaschinen**
Dosage device for dishwashers
Dispositif de dosage pour les machines à laver la vaisselle

(43) Veröffentlichungstag der Anmeldung: 13.10.1993
(73) Patentinhaber: AWECO Kunststofftechnik Gerätebau GmbH & Co. KG, D-88099 Neukirch (DE)
(72) Erfinder: Schrott, Harald, W-8990 Lindau (DE)
(74) Vertreter: Patentanwälte Eisele, Otten & Roth

(56) Entgegenhaltungen:
- EP-A- 0 346 631
- CH-A- 346 923
- DE-A- 2 430 707
- DE-A- 3 524 100
- DE-U- 1 957 366
- US-A- 4 211 905

## Beschreibung

Die Erfindung betrifft eine Dosiervorrichtung für Reinigungs- und/oder Klarspülmittel zum Einbau in Geschirrspülmaschinen, welche Vorrichtung ein von einem Dichtflansch umgebenes Kunststoffgehäuse und Stützkrallen aufweist, deren mit einem stufenförmigen Fuß versehene Spreizschenkel beim Einfügen des Kunststoffgehäuses in ein Fenster einer Blechwand des Geschirrspülmaschinengehäuses einfedern und nach Aufliegen des Dichtflansches auf der Blechwand sich aufspreizen und die Vorrichtung in der erreichten Einbaustellung festhalten.

Eine solche Dosiervorrichtung ist aus der DE-A-35 24 100 bekannt. Deren Kunststoffgehäuse weist angeformte Stützkrallen auf. Es ist jedoch wünschenswert, für solche Gehäuse billigere Kunststoffe zu verwenden, z.B. übliches Polypropylen, welche nicht die für die Stützkrallen benötigte Elastizität aufweisen. Andererseits ergeben sich Probleme bei der Demontage, beispielsweise im Rahmen eines Kundendienstes, weil es schwierig ist, alle Krallen gleichzeitig zurückzudrücken. Dabei ist zu beachten, daß der Auflageflansch mittels eines Ringschlauchs abgedichtet ist und infolge der verhältnismäßig großen Länge der Dichtstrecke sehr erhebliche Kräfte aufgebracht werden müssen, die eine entsprechend große Anzahl Stützkrallen verlangen.

Aus der DE-A 24 30 707 ist es bekannt, bei einer in eine Blende eines Küchenherds einzusetzenden Steckdose mit einem Kunststoffgehäuse lösbar angebrachte Stützkrallen aus Federblattmaterial mit stabilem U-Querschnitt zu verwenden. Die Verbindung der Stützkrallen mit dem speziellen zweiteiligen Gehäuse erfolgt dabei in der Weise, daß die streifenförmigen Befestigungsbasen der Krallen in der Teilungsebene zwischen die beiden Gehäusehälften eingeklemmt werden. Dies ist jedoch bei einem einteiligen Gehäuse nicht möglich und hat den weiteren Nachteil, daß bei einer eventuell erforderlichen Demontage das Steckdosengehäuse auseinanderfällt.

Der Erfindung liegt die Aufgabe zugrunde, bei der Fertigung der eingangs genannten Dorsiervorrichtungen auf höchst rationelle Weise metallene Stützkrallen an dem einteiligen Kunststoffgehäuse so zu befestigen, daß sie im Sinne einer kundenfreundlichen Produktgestaltung einfach wieder entfernt werden können.

Diese Aufgabe wird ausgehend von einer Dosiervorrichtung der einleitend bezeichneten Art erfindungsgemäß dadurch gelöst, daß die Stützkrallen aus Federblech bestehen und je eine Basis aufweisen, die an dem Kunststoffgehäuse angeschraubt ist, und daß an der Basis einerseits eine abgekantete Arretierzunge und andererseits ein Halteschenkel ansitzt, dessen an einer Biegekante um nahezu 180 ° zurückgebogener Endabschnitt den Spreizschenkel bildet.

Die Basis der Stützkrallen ist vorzugsweise eine ebene Partie des Federblechs. Sie kann zur individuellen Befestigung mittels einer Schraube ein Loch aufweisen und braucht nicht viel größer als der Kopf der Schraube zu sein. Lösbare einzeln befestigte Stützkrallen haben den Vorteil, daß die Dosiervorrichtung durch Entfernen der Krallen vom Kundendienstmonteur einfach ausgebaut werden kann.

Zur Fertigungserleichterung bzw. im Hinblick auf eine selbsttätige Fertigung der Dosiervorrichtung dient die an der Basis angeordnete abgekantete Arretierzunge. Sie sollte rechtwinklig abgekantet sein und in die zum Halteschenkel entgegengesetzte Richtung weisen. Mehrere solcher Arretierzungen machen es beispielsweise möglich, die Stützkralle zur Vormontage auf einen entsprechend geformten Vorsprung klemmend aufzustecken. Die Arretierzunge kann aber auch in eine Vertiefung des Gehäusekörpers eingesteckt werden. Zu gleichem Zweck wird alternativ vorgeschlagen, daß an den Seitenrändern der Arretierzungen Widerhaken angeformt sind, so daß eine in eine passende Tasche eingesteckte Arretierzunge als Montagehilfe und zur Drehsicherung beim Festschrauben ausreicht.

Die Herstellung der Stützkrallen als Stanzbiegeteile aus Federblech ist außerordentlich kostengünstig und fördert die Möglichkeiten, das Anbringen der Stützkrallen an dem Kunststoffgehäuse mit geeigneten Fertigungseinrichtungen voll selbsttätig durchzuführen. Metall als Werkstoff, insbesondere nicht rostender Stahl, garantiert im Zusammenwirken mit der vorgeschlagenen Form sowohl ausreichende Elastizität als auch höchste Haltekräfte für unbegrenzte Zeit.

Der Spreizschenkel hat einen U-förmigen Querschnitt, wobei die etwa parallel verlaufenden Endkanten der U-Schenkel den Fuß bilden. Die gezackte, insbesondere rechtwinklig stufenförmige Ausbildung dieser Kanten, ergibt eine außerordentlich stabile Abstützung an den quer dazu verlaufenden Kanten der Durchzüge, d.h. nach innen gekanteter Randstreifen der Fensteröffnungen, in welche die betreffenden Vorrichtungen eingesteckt werden.

Zur Erhöhung der Biegestabilität des Halteschenkels wird vorgeschlagen, daß dieser an der Basis die Querschnittsform einer gewölbten Rinne hat, die zur Biegekante hin eben ausläuft. Andererseits kann die Belastbarkeit des Spreizschenkels auf Druck dadurch erhöht werden, daß dessen Stegbereich von der Biegekante an zunehmend querschnittlich gewölbt ist.

Ein weiterer Vorschlag geht dahin, daß an dem Kunststoffgehäuse Sockel zur Befestigung der Stützkrallen angeformt sind, die so weit frei stehen, daß die U-Schenkel beim Einfedern der Spreizschenkel seitlich vorbeigreifen können. Solche Sockel können bei rechteckigen Vorrichtungen sowohl an den Ecken als auch nach Bedarf an den geraden Längsseiten angeordnet werden. Zur Vormontage wird vorgeschlagen, daß hinter den Sockeln Taschen angeformt sind, in welche je eine Arretierzunge pro Befestigungsbasis so eingefügt werden kann, daß sie sich mit ihren Widerhaken festhält.

Ein Ausführungsbeispiel der Erfindung wird nachfolgend anhand der Zeichnung erläutert. Im einzelnen zeigt
- Fig. 1: die Seitenansicht einer als Stanzbiegeteil ausgeführten Stützkralle im Lieferzustand,
- Fig. 2: die Ansicht der Stützkralle gemäß Fig. 1 von rechts gesehen,
- Fig. 3: einen Schnitt III-III der Stützkralle gemäß Fig.1
- Fig. 4: einen Schnitt IV-IV der Stützkralle gem. Fig. 1
- Fig. 5: den flachen Zuschnitt des Ausgangs-Stanzteils in kleinerem Maßstab,
- Fig. 6: eine Draufsicht einer an einer Ecke eines Dosiervorrichtungsgehäuses befestigten Stützkralle im Einbauzustand,
- Fig. 7: einen Schnitt VII-VII der Anordnung gemäß Fig. 6,

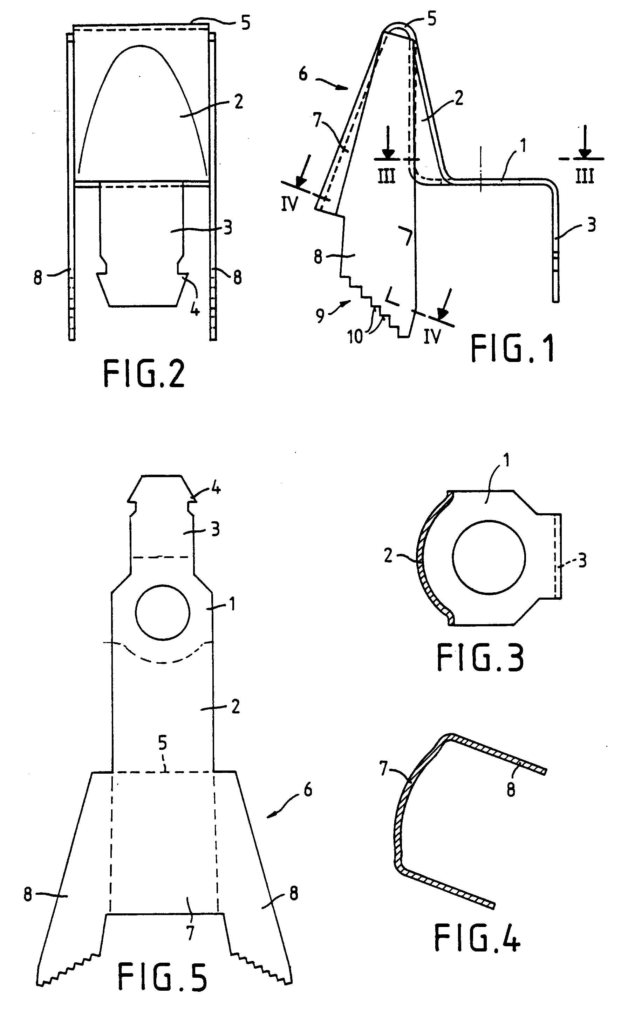

An einer ringscheibenförmigen Basis 1 der Stützkralle sitzt einerseits ein Halteschenkel 2 und diametral gegenüber eine Arretierzunge 3 an. Die Form dieser rechtwinklig nach unten abgekanteten Arretierzunge 3 zeigt am besten Fig. 2. An den Längsseiten ist je ein Widerhaken 4 in Form eines leicht überstehenden Zahnes angeschnitten. Am Übergang zur Basis 1 hat der Halteschenkel einen nach außen gewölbten, rinnenförmigen Querschnitt (Fig. 3), um der Biegebelastung Stand zu halten. Wie Fig. 2 zeigt, läuft die Rinne nach oben zu einer waagerechten Biegekante 5 hin aus, an welcher ein nach unten stehender Spreizschenkel 6 seinen Ausgang nimmt. Er hat jedenfalls in seinem oberen Abschnitt einen U-förmigen Querschnitt, so daß ein Stegbereich 7 und zwei ebene, etwa parallel zueinander angeordnete U-Schenkel 8 zu unterscheiden sind. Die Breite der letzteren nimmt nach unten zu und sie stehen nach unten über den Stegbereich 7 hinaus. Die Endkanten 9 verlaufen schräg und sind mit rechtwinklig eingeschnittenen Zähnen versehen, so daß sich eine Treppenkontur mit sechs gestuften Auflagekanten 10 ergibt. Ähnlich wie der Halteschenkel 2 ist der Stegbereich 7 des Spreizschenkels von der Biegekante 5 beginnend zunehmend gewölbt.

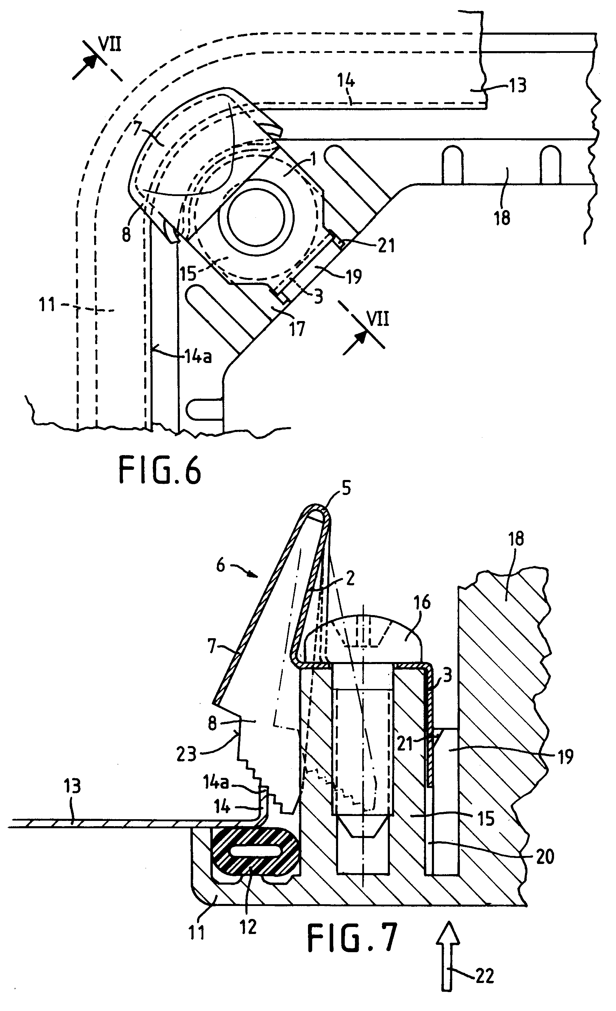

Die Figuren 6 und 7 zeigen, wie die beschriebene Stützkralle an einer Eckpartie einer Dosiervorrichtung aus Kunststoff angebracht ist, damit diese mit Hilfe eines Montageroboters an der Innenseite der Beschickungsktüre einer Geschirrspülmaschine montiert werden kann.

Das Gehäuse der Dosiervorrichtung ist nur bruchstückhaft gezeigt. Der in der eingebauten Position sichtbare Bedienungsteil umfaßt auch einen Auflageflansch 11, der einen Dichtschlauch 12 enthält. Die Vorrichtung wird in das Türblech 13 eingesetzt, dessen entsprechende Öffnung einen Durchzug 14 aufweist, der den Rand der Öffnung versteift. In Abständen längs des Auflageflansches 11, im Beispiel an einer Ecke, sind säulenartige Sockel 15 angeformt, die je ein Loch für eine Befestigungsschraube 16 aufweisen. An der dem Rand des Auflageflansches 11 zugewandten Vorderseite steht der Sockel 15 frei, während sich an der Rückseite zwei parallele Wandabschnitte 17 tangential anschließen. Diese bilden mit einer umlaufenden Wand 18 des Vorrichtungsgehäuses eine Tasche 19, die an den Schmalseiten innen je eine Einstecknut 20 aufweist. Jede von ihnen öffnet sich oben über eine Schrägfläche 21 trichterförmig.

Die Montage der Stützkralle an der teilweise beschriebenen Dosiervorrichtung erfolgt in der Weise, daß die Arretierzunge 3 in die Einstecknuten 20 eingesteckt wird, bis die Basis 1 auf der Stirnfläche des Sockels 15 aufliegt. Infolge der Widerhaken 4 behält die Stützkralle diese Vormontierstellung genau bei. Daraufhin werden die Schrauben 16 eingedreht, was ohne weiteres möglich ist, solange die Stützkralle sich noch im Lieferzustand gemäß Fig. 1 befindet, in welchem die gewölbte Wand des Halteschenkels 2 zur Basis 1 noch senkrecht steht. Nach dem Festschrauben wird der Halteschenkel 2 in die Schrägestellung nach den Figuren 6 und 7 gebogen, in welcher sich der Halteschenkel leicht über die Basis neigt. Dabei schwenkt der Spreizschenkel 6 mit seinem unteren Abschnitt weiter von dem Sockel 15 weg.

Wird nun die Vorrichtung in Richtung des Pfeiles 22 gemäß Fig. 7 in die Türblechöffnung eingeführt, so kommt der Stegbereich 7 der Stützkralle mit seiner Rückenlinie an der Biegekante des Durchzugs 14 zur Anlage und wird bei der weiteren Bewegung durch elastische Verformung zum Sockel 15 hin geschwenkt. Dabei gelangt der Spreizschenkel 6 kurz bevor das Ende der erwähnten Rückenlinie erreicht ist in die strichpunktiert angedeutete Stellung. Bei der weiteren Bewegung der Vorrichtung in Richtung des Pfeiles 22 bewegt sich das Ende des Stegbereiches 7 über die Kante 14a des Durchzuges, so daß der Spreizschenkel zunächst so weit zurückspringt, daß die Kanten 23 der vorstehenden U-Schenkel am Durchzug 14 anliegen. Schließlich wandert auch diese Kante 23 über die Kante 14a des Durchzuges hinaus, wonach sich der Spreizschenkel 6 stufenweise weiter aufspreizt. Wenn schließlich, wie in Fig. 7 gezeigt, der Auflageflansch 11 an dem Türblech zur Anlage kommt und der Dichtschlauch 12 sich querschnittlich oval verformt hat, dann bleiben die U-Schenkel 8 mit einer ihrer Stufen an der Kante 14a hängen und die Stützkralle stützt sich mit den Auflagekanten 10 der betreffenden Stufe bleibend auf dem Durchzug 14 ab. Auch bei Maßabweichungen der Öffnung oder des Durchzuges 14 ist immer eine sichere Abstützung und damit eine zuverlässige und dichte Schnellmontage der Dosiervorrichtung gewährleistet. Zum Auswechseln der Vorrichtung braucht der Kundendienstmonteur nur die Stützkrallen abzuschrauben.
- 1: Basis
- 2: Halteschenkel
- 3: Arretierzunge
- 4: Widerhaken
- 5: Biegekante
- 6: Spreizschenkel
- 7: Stegbereich
- 8: U-Schenkel
- 9: Endkante
- 10: Auflagekante
- 11: Auflageflansch
- 12: Dichtschlauch
- 13: Türblech
- 14: Durchzug
- 14a: Kante
- 15: Sockel
- 16: Schraube
- 17: Wandabschnitt
- 18: umlauf. Wand
- 19: Tasche
- 20: Einstecknut
- 21: Schrägfläche
- 22: Montagerichtung
- 23: Kante

## Patentansprüche

1. Dosiervorrichtung für Reinigungs- und/oder Klarspülmittel zum Einbau in Geschirrspülmaschinen, welche Vorrichtung ein von einem Dichtflansch (11, 12) umgebenes Kunststoffgehäuse und Stützkrallen aufweist, deren mit einem stufenförmigen Fuß versehene Spreizschenkel (6) beim Einfügen des Kunststoffgehäuses in ein Fenster einer Blechwand (13) des Geschirrspülmaschinengehäuses einfedern und nach Aufliegen des Dichtflansches (11, 12) auf der Blechwand (13) sich aufspreizen und die Vorrichtung in der erreichten Einbaustellung festhalten, dadurch gekennzeichnet, daß die Stützkrallen aus Federblech bestehen und je eine Basis (1) aufweisen, die an dem Kunststoffgehäuse angeschraubt ist, und daß an der Basis (1) einerseits eine abgekantete Arretierzunge (3) und andererseits ein Halteschenkel (2) ansitzt, dessen an einer Biegekante (5) um nahezu 180° zurückgebogener Endabschnitt den Spreizschenkel (6) bildet.

2. Dosiervorrichtung nach Anspruch 1, dadurch gekennzeichnet, daß der Spreizschenkel (6) einen U-förmigen Querschnitt mit einem Stegbereich (7) und zwei U-Schenkeln (8) aufweist, wobei die Endkanten (9) der U-Schenkel (8) den Fuß bilden.

3. Dosiervorrichtung nach Anspruch 1, dadurch gekennzeichnet, daß an den Seitenrändern der Arretierzunge (3) Widerhaken (4) angeformt sind.

4. Dosiervorrichtung nach Anspruch 1, dadurch gekennzeichnet, daß der Halteschenkel (2) an der Basis (1) die Querschnittsform einer gewölbten Rinne hat, die zur Biegekante (5) hin eben ausläuft.

5. Dosiervorrichtung nach Anspruch 2, dadurch gekennzeichnet, daß der Stegbereich (7) des Spreizschenkels (6) von der Biegekante (5) an zunehmend querschnittlich gewölbt ist.

6. Dosiervorrichtung nach Anspruch 1, dadurch gekennzeichnet, daß die Halteschenkel (2) über die befestigten Basen (1) geneigt sind.

7. Dosiervorrichtung nach Anspruch 2, dadurch gekennzeichnet, daß am Kunststoffgehäuse Sockel (15) zur Befestigung der Basen (1) angeformt sind, die so weit frei stehen, daß die U-Schenkel (8) beim Einfedern der Spreizschenkel (6) seitlich vorbeigreifen können.

8. Dosiervorrichtung nach Anspruch 7, dadurch gekennzeichnet, daß hinter den Sockeln (15) Taschen (19) eingeformt sind, in welche die Arretierzungen (3) selbsthaftend eingefügt werden können.

## Claims

1. Dosage device for cleaning and/or rinsing agents for installation in dishwashers, which device comprises a plastic housing surrounded by a sealing flange (11, 12) and support claws, the expanding arms (6) provided with a stepped foot of which spring inwards on the insertion of the plastic housing into a window of a sheet metal wall (13) of the dishwasher housing and expand outwards after placing the sealing flange (11, 12) against the sheet metal wall (13) and secure the device in the its installation position,
characterised in that the support claws are made of spring sheet metal and each have a base (1) which is screwed onto the plastic housing, and in that on the base (1) there is on one side an edged locking tongue (3) and on the other side a holding arm (2), the end section of which bent back at a bending edge (5) by almost 180° forms the expanding arm (6).

2. Dosage device according to Claim 1, characterised in that the expanding arm (6) has a U-shaped cross section with a link part (7) and two U-sides (8), whereby the edges (9) of the U-sides (8) form the foot.

3. Dosage device according to Claim 1, characterised in that barbs (4) are formed on the side edges of the locking tongue (3).

4. Dosage device according to Claim 1, characterised in that the holding arm (2) on the base (1) has the cross sectional shape of an arched groove which runs evenly towards the bending edge (5).

5. Dosage device according to Claim 2, characterised in that the link part (7) of the expanding arm (6) is arched increasingly in cross section from the bending edge (5) on.

6. Dosage device according to Claim 1, characterised in that the holding arms (2) are inclined over the fixed bases (1).

7. Dosage device according to Claim 2, characterised in that pedestals (15) are formed on the plastic housing for securing the bases (1) which are positioned freely so that the U-sides (8) can engage past to the side on the inwards springing of the expanding arms (6).

8. Dosage device according to Claim 7, characterised in that pockets (19) are formed behind the pedestals (15) into which the locking tongues (3) can be inserted to be self-locking.

## Revendications

1. Dispositif de dosage pour un agent de nettoyage et/ou de rinçage, destiné à être monté dans des machines à laver la vaisselle, lequel dispositif présente des crampons d'appui et un boîtier en matière synthétique entouré par une bride d'étanchéité (11,12), dont les branches d'écartement (6) munies d'un pied étagé, lors de l'introduction du boîtier de matière synthétique, s'engagent élastiquement dans une fenêtre d'une paroi en tôle (13) du carter de la machine à laver la vaisselle et s'écartent après appui de la bride d'étanchéité (11,12) sur la paroi en tôle (13), et maintiennent le dispositif dans la position de montage atteinte,
caractérisé en ce que les crampons d'appui sont constitués d'une tôle élastique et présentent, à chaque fois, une base (1) qui est vissée sur le boîtier de matière synthétique, et en ce que, sur la base (1), se trouvent, d'une part, une languette de blocage chanfreinée (3) et, d'autre part, une branche de maintien (2), dont le tronçon d'extrémité replié de sensiblement 180° sur un bord de pliage (5) forme la branche d'écartement (6).

2. Dispositif de dosage selon la revendication 1,
caractérisé en ce que la branche d'écartement (6) présente une section transversale en forme de U avec une zone d'âme (7) et deux branches en U (8), les bords d'extrémité (9) des branches en U (8) formant le pied.

3. Dispositif de dosage selon la revendication 1,
caractérisé en ce que des crochets (4) sont formés sur les bords latéraux de la languette de blocage (3).

4. Dispositif de dosage selon la revendication 1,
caractérisé en ce que la branche de maintien (2) présente, sur la base (1), la forme en section transversale d'une goulotte cintrée, qui s'achève de façon plane vers le bord de pliage (5).

5. Dispositif de dosage selon la revendication 2,
caractérisé en ce que la zone d'âme (7) de la branche d'écartement (6) est cintrée en croissant en section transversale à partir du bord de pliage (5).

6. Dispositif de dosage selon la revendication 1,
caractérisé en ce que les branches de maintien (2) sont inclinées sur les bases fixes (1).

7. Dispositif de dosage selon la revendication 2,
caractérisé en ce que des socles (15) pour la fixation des bases (1) sont formés sur le boîtier de matière synthétique, lesquels sont tels que les branches en U (8), lors de la mise en place élastique des branches d'écartement (6), peuvent s'y engager latéralement.

8. Dispositif de dosage selon la revendication 7,
caractérisé en ce que, derrière les socles (15), sont formées des poches (19) dans lesquelles les languettes de blocage (3) peuvent être introduites de façon auto-adhérente.
